# EUROPEAN PATENT SPECIFICATION

(11) **EP 4 129 088 B1**
(45) Date of publication and mention of the grant of the patent: **11.03.2026**
(21) Application number: 21775327.6
(22) Date of filing: 26.03.2021
(51) Int. Cl.: A23L 27/50, A23L 27/00

(54) **PASTEURIZED SOY SAUCE**
PASTEURISIERTE SOJASOSSE
SAUCE DE SOJA PASTEURISÉE

(30) Priority: 26.03.2020 JP 2020056774
(43) Date of publication of application: 08.02.2023
(73) Proprietor: Kikkoman Corporation, Noda-shi, Chiba 278-8601 (JP)
(72) Inventor: OHNO, Naoto, Noda-shi, Chiba 278-8601 (JP); KUNITAKE, Yuri, Noda-shi, Chiba 278-8601 (JP); KOMURA, Akitoshi, Noda-shi, Chiba 278-8601 (JP); HANADA, Yoichi, Noda-Shi, Chiba 278-8601 (JP)
(74) Representative: Kramer Barske Schmidtchen Patentanwälte PartG mbB
(86) International application number: PCT/JP2021/012891
(87) International publication number: WO 2021/193925

(56) References cited:
- CN-A- 107 177 520
- JP-A- 2019 080 494
- JP-A- S 642 550
- JP-B2- H 082 264
- LIANG RU ET AL: "Investigating the differences of flavor profiles between two types of soy sauce by heat-treatment", INTERNATIONAL JOURNAL OF FOOD PROPERTIES, vol. 22, no. 1, 10 December 2019 (2019-12-10), US, pages 1998 - 2008, XP055917251, ISSN: 1094-2912, DOI: 10.1080/10942912.2019.1698603

## Description

### TECHNICAL FIELD

The present invention relates to a pasteurized soy sauce.

### BACKGROUND ART

A soy sauce is manufactured by obtaining a soy sauce *koji* by inoculating a seed *koji* starter including a *koji* mold into a mixture of a protein raw material such as soybeans denatured by heating and a starch raw material such as wheat pregelatinized by heating, followed by culturing to make a *koji,* subsequently obtaining a soy sauce *moromi* by putting the obtained soy sauce *koji* into a saline solution, followed by lactic acid fermentation and aging, subsequently obtaining an aged *moromi* by subjecting the obtained soy sauce *moromi* to yeast fermentation and aging, subsequently obtaining an unheated soy sauce by subjecting the obtained aged *moromi* to a pressing treatment or a filtration treatment, subsequently pasteurizing the obtained unheated soy sauce and the like, in the case of a brewing process.

In the above conventional method for manufacturing a soy sauce, the process from obtaining a soy sauce *koji* to obtaining an aged *moromi* is performed continuously. That is, yeast fermentation or the like is performed by adding a yeast to a soy sauce *moromi* obtained by lactic acid fermentation or the like from a soy sauce *koji,* and so on. The yeast fermentation is performed by adding a yeast to a soy sauce *moromi* and leaving the resultant as it is for around several weeks to several months. The aging period of the soy sauce *moromi* is generally three months or longer. Although Patent Literature 1 below describes a method for shortening the aging period, one month to two months are still required.

Soy sauces have been used of course for cocking as they are and also as soy sauce processed products such as soup, sauce and *ponzu* by blending with a soup stock, a vegetable, a fruit or the like. Soy sauces have also been used as raw materials for seasonings such as mixtures for subsidiary dishes after blending with various ingredients and subsequent retort pasteurization. Patent Literature 2 and Patent Literature 3 disclose further soy sauces.

### CITATION LIST

### PATENT LITERATURE

Patent Literature 1: JP-B-H8-2264
Patent Literature 2: CN 107 177 520 A
Patent Literature 3: JP 2019-080494 A

### SUMMARY OF INVENTION

### TECHNICAL PROBLEM

However, when a soy sauce is used in the above manner, there are problems of heat deterioration due to strong heating and problems of the aroma-maintaining property and the shelf life due to storage over a certain period. Moreover, in addition to the known methods, few soy sauces which do not easily deteriorate by heating and which have an excellent aroma-maintaining property and an excellent shelf life have been known so far.

Therefore, in the invention, a problem to be solved by the invention is to provide a soy sauce which can be manufactured by a brewing process and which does not easily deteriorate by heating and has an excellent aroma-maintaining property and an excellent shelf life while having a flavor inherent in a soy sauce.

### SOLUTION TO PROBLEM

In order to solve the problem, the present inventors have reviewed the components, the manufacturing methods and the like of soy sauces obtainable by a brewing process and tried to obtain a soy sauce which is excellent as a seasoning through trial and error. In the process, the inventors have found that the soy sauce obtained by the method described in Patent Literature 1 contains a tiny amount of phenethyl acetate in addition to ethyl decanoate and ethyl octanoate. Phenethyl acetate is known as a material having a rose-like aroma. Moreover, the phenethyl acetate content of a commercial soy sauce is less than the lower detection limit.

Thus, the present inventors have further examined the conditions under which the amount of phenethyl acetate would become high through trial and error and found that the phenethyl acetate content increases at an early stage of yeast fermentation and that the phenethyl acetate content decreases when the period of yeast fermentation is a certain period or longer.

Based on the findings, the inventors have pasteurized a yeast fermented product in which the phenethyl acetate content reached a sufficient amount and surprisingly succeeded in manufacturing a pasteurized soy sauce which can be stored while maintaining the phenethyl acetate content.

The present inventors have finally succeeded in producing a pasteurized soy sauce containing a certain amount of phenethyl acetate. The invention is an invention which has been completed based on the findings and the successful examples.

Therefore, according to the invention, the following is provided.
[1] A method for manufacturing a phenethyl acetate-containing soy sauce according to claim 1.

### ADVANTAGEOUS EFFECTS OF INVENTION

According to the pasteurized soy sauce, the flavors of a food material and a cooked material can be further improved due to the contained phenethyl acetate. The pasteurized soy sauce can be manufactured by a brewing process and thus can be industrially manufactured with a commercial soy sauce or in place of a commercial soy sauce.

### BRIEF DESCRIPTION OF DRAWINGS

[Fig. 1] Fig. 1 is a figure showing the measurement results of phenethyl acetate during yeast fermentation of liquid fermented soy sauces obtained in the case 1 as described in Example 1 described below.
[Fig. 2] Fig. 2 is a figure showing the measurement results of phenethyl acetate regarding the samples of test groups with and without pasteurization obtained in the case 2 as described in Example 1 described below.

### DESCRIPTION OF EMBODIMENTS

Although details of aspects of the invention are explained below, the invention is not limited only to the matters of this item and can take various aspects as long as the objects of the invention are achieved.

Each term in this description is used in the meaning generally used by those skilled in the art unless otherwise specified and should not be interpreted as having an unduly restrictive meaning. Because the suppositions and the theories given in this description have been made based on the findings and the experiences made by the present inventors so far, the invention should not adhere only to such suppositions and theories.

The "content" has the same meaning as concentration and means the ratio of the amount of a component with respect to the total amount of the soy sauce. The total amount of the contents of the components, however, does not exceed 100%.

The term "ppm" is a unit as the generally known meaning, and specifically, 1 ppm is 1/10⁶ and is 1 mg/L (w/v).

The term "ppb" is a unit as the generally known meaning, and specifically, 1 ppb is 1/10⁹ and is 1 ng/g in terms of gram.

The term "and/or" means any one of a plurality of related items listed, an arbitrary combination of two or more thereof or a combination of all thereof.

The "to" in a numerical range refers to a range including the values before and after the term, and for example, "0% to 100%" means the range which is 0% or more and 100% or less. The "exceed" and "less than" mean the lower limit and the upper limit, respectively, which do not include the value after the term. For example, "exceed 1" is a value larger than 1, and "less than 100" means a value smaller than 100.

The "contain/include" means that an element other than the element(s) which is clearly stated to be contained/included can be added (having the same meaning as "contain/include at least") but includes "consist of" and "consist essentially of". That is, the "contain/include" can mean that the subject matter contains/includes a clearly stated element(s) and any one, two or more kinds of element, consists of a clearly stated element(s) or consists essentially of a clearly stated element(s). The element is a limiting subject matter such as a component, a step, a condition and a parameter or the like.

The "flavor" means an aroma which comes up from the inside of the mouth to the nose when the product is put into the mouth (retronasal), the taste felt with the tongue when the product is put into the mouth (taste) or the both.

The digits of an integer value are the same as the significant figures. For example, 1 has one significant figure, and 10 has two significant figures. The decimal places of a decimal to the right of the decimal point are the same as the significant figures. For example, 0.1 has one significant figure, and 0.10 has two significant figures.

The pasteurized soy sauce of an aspect of the invention is a pasteurized soy sauce in which the phenethyl acetate content is a certain amount. While the pasteurized soy sauce of an aspect of the invention has a flavor inherent in a soy sauce, the pasteurized soy sauce does not easily deteriorate by heating compared to the conventional soy sauces and has an excellent aroma-maintaining property and an excellent shelf life because the phenethyl acetate content is a certain amount. The effect of phenethyl acetate of not easily causing deterioration by heating, achieving an excellent aroma-maintaining property and an excellent shelf life and as a result further improving the flavor of the soy sauce itself and/or the flavors of a food material and a cooked material is sometimes called "taste-improving effect".

The soy sauce (also referred to as shoyu) means a material to be used as a seasoning as generally known. The soy sauce is defined, for example, in the "Quality Labeling Standards for Soy Sauce" and the "Japanese Agricultural Standards for Soy Sauce" in Ministry of Agriculture, Forestry and Fisheries Notification.

Phenethyl acetate is a compound having the structure represented by the following formula (I) 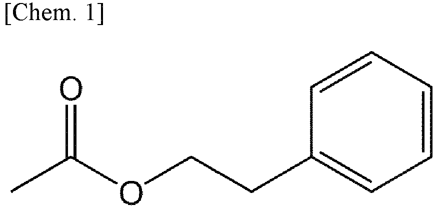 as generally known.

The phenethyl acetate content of the pasteurized soy sauce of an aspect of the invention is such an amount that exhibits the taste-improving effect and is specifically 30 ppb or more, preferably 50 ppb or more to exhibit an excellent taste-improving effect, more preferably 100 ppb or more. However, phenethyl acetate itself has an aroma of rose, and the threshold of the aroma is considered to be about 3,000 ppb. Thus, when the phenethyl acetate content is sufficiently high, specifically when 20,000 ppb or more of phenethyl acetate is contained, an undesired flower-like different aroma may be given to the pasteurized soy sauce during meals. Thus, the upper limit of the phenethyl acetate content is preferably an amount smaller than 20,000 ppb, more preferably 15,000 ppb or less, further preferably 10,000 ppb or less, still further preferably 3,000 ppb or less.

As described above, the phenethyl acetate content is 30 ppb or more but is, in order to exhibit a more excellent taste-improving effect, preferably 30 ppb to 20,000 ppb, more preferably 30 ppb to 15,000 ppb, further preferably 30 ppb to 3,000 ppb. Here, "30 ppb to 3,000 ppb of phenethyl acetate" means, for example, 3,000 ng to 300,000 ng (=300 µg) of phenethyl acetate based on 100 ml of the pasteurized soy sauce.

The pasteurized soy sauce of an aspect of the invention exhibits a taste-improving effect which cannot be obtained with a conventional soy sauce because the phenethyl acetate content is the above amount. The taste-improving effect of phenethyl acetate, however, can be masked by 2-ethyl-6-methylpyrazine, which is inherently contained in conventional soy sauces. Thus, the 2-ethyl-6-methylpyrazine content of the pasteurized soy sauce may be, for example, such an amount that does not suppress the taste-improving effect of phenethyl acetate and is preferably 50 ppb or less, more preferably 20 ppb or less, further preferably 10 ppb or less, still further preferably 5 ppb or less. The lower limit of the 2-ethyl-6-methylpyrazine content of the pasteurized soy sauce is not particularly limited and may be less than the lower detection limit, namely substantially 0 ppb.

The pasteurized soy sauce of an aspect of the invention is characterized by, while having a taste-improving effect, having a flavor inherent in a soy sauce due to HEMF (4-hydroxy-2(or 5)-ethyl-5(or 2)-methyl-3(2H)-furanone) or the like because soy sauce components are contained. Thus, the HEMF content of the pasteurized soy sauce is preferably 20 ppm or more, more preferably 30 ppm or more, further preferably 40 ppm or more. The upper limit of the HEMF content may be appropriately set depending on the desired flavor inherent in a soy sauce and is typically around 200 ppm.

The phenethyl acetate and alcohol contents of the pasteurized soy sauce of an aspect of the invention can be measured by the methods described in the Examples described below. The 2-ethyl-6-methylpyrazine and HEMF contents can be measured by the methods described in Patent Literature 1.

The method for manufacturing a pasteurized soy sauce of an aspect of the invention is not particularly limited as long as a pasteurized soy sauce in which the phenethyl acetate content is a certain amount is obtainable by the method, but manufacture by a brewing process is preferable. In this case, unlike in a regular brewing process, a material obtainable by removing the insoluble solid content from a soy sauce *moromi* obtainable by lactic acid fermentation is used for yeast fermentation.

Specific examples of the method for manufacturing a pasteurized soy sauce include a method including a step of obtaining a soy sauce *moromi* obtainable by a method for manufacturing a soy sauce by a brewing process, a step of obtaining a soup of the soy sauce *moromi* by removing the insoluble solid content from the obtainable soy sauce *moromi,* a step of obtaining an unheated soy sauce through yeast fermentation using the soup of the soy sauce *moromi* and a step of obtaining a pasteurized soy sauce by pasteurizing the obtainable unheated soy sauce and the like. Other specific examples of the method for manufacturing a pasteurized soy sauce include a method including a step of obtaining a soy sauce *moromi* obtainable by a method for manufacturing a soy sauce by a brewing process, a step of obtaining a soup of the soy sauce *moromi* by removing the insoluble solid content from the obtainable soy sauce *moromi,* a step of obtaining a pasteurized soup of the soy sauce *moromi* by pasteurizing the soup of the soy sauce *moromi* and a step of obtaining a pasteurized soy sauce through yeast fermentation using the pasteurized soup of the soy sauce *moromi* and the like. Non-limiting specific examples of the steps are explained below.

The step of obtaining a soy sauce *moromi* is a step of inoculating a seed *koji* starter into a soy sauce raw material that is a mixture of soybeans denatured by steaming, roasted crushed cereal grains and the like, processing with aeration at 20°C to 40°C for around two days to four days to obtain a soy sauce *koji* (koji-making) and subsequently subjecting a material obtained by putting the soy sauce *koji* into a saline solution having a sodium chloride concentration of 20 mass% to 30 mass% and further arbitrarily adding a soy sauce lactic acid bacterium thereto to lactic acid fermentation at 20°C to 40°C for 10 days to 200 days while appropriately stirring, thereby obtaining a soy sauce *moromi.*

The soy sauce raw material is not particularly limited, but examples thereof include soybeans such as whole soybeans and defatted soybeans, cereal grains such as wheat, barley, naked barley and Job's tears, cereal grain gluten, rice, corn and the like.

The seed *koji* starter is not particularly limited as long as it is a *koji* mold that is utilized when manufacturing a regular soy sauce, but examples thereof include *Aspergillus oryzae, Aspergillus sojae (A. sojae)* and the like. The soy sauce lactic acid bacterium is not particularly limited as long as it is a soy sauce lactic acid bacterium that is utilized when manufacturing a regular soy sauce, but examples thereof include salt-tolerant lactic acid bacteria such as *Tetragenococcus halophilus* and the like.

In the step of obtaining a soy sauce *moromi,* when the amount of the starch raw material such as wheat and rice is small in the soy sauce raw material, the reducing sugar content becomes small, and a soy sauce *moromi* with which yeast fermentation can be appropriately performed may not be able to be obtained. Therefore, it is preferred that the amount of the starch raw material such as wheat and rice in the soy sauce raw material is such an amount that a soy sauce *moromi* having a high reducing sugar content can be obtained. However, this shall not apply when a soy sauce *moromi* having a high reducing sugar content is obtained by adding a reducing sugar component, for example, glucose, fructose, maltose, table sugar, a sweet sake or the like, to a soy sauce *moromi.* That is, in the soy sauce *koji,* an adjusted soy sauce *koji* adjusted by adding a reducing sugar component after obtaining a soy sauce *koji* having a high total nitrogen content by inoculating a seed *koji* starter into a protein raw material such as soybeans to make a *koji* is included. Note that the reducing sugar means a direct reducing sugar as stated in the "Japanese Agricultural Standards for Soy Sauce" in Ministry of Agriculture, Forestry and Fisheries Notification.

The step of obtaining a soup of the soy sauce *moromi* is a step of obtaining a soup of the soy sauce *moromi* by subjecting the soy sauce *moromi* to a generally known solid-liquid separation treatment or a solid-liquid separation treatment and a removal of bacteria treatment and thus removing the insoluble solid content to such an extent that phenethyl acetate is produced by yeast fermentation in the later stage.

The solid-liquid separation treatment and the removal of bacteria treatment are a filtration treatment using a filter medium such as diatomaceous earth, a membrane filtration treatment using various permeable membranes such as a MF membrane and a UF membrane, a pressing filtration treatment with a press machine using a filter cloth, a heating treatment of increasing the temperature until a microorganism is killed or the like, and one thereof alone or a combination thereof can be performed once or for several times. A large part of the soy sauce lactic acid bacterium is preferably removed from the soup of the soy sauce *moromi* together with the insoluble solid content so that phenethyl acetate is appropriately synthesized through yeast fermentation in the later stage. The lactic acid bacterium content of the soup of the soy sauce *moromi* is not particularly limited but is, for example, preferably 1.0×10⁸ cells/ml or less, more preferably 1.0×10⁷ cells/ml or less, further preferably 1.0×10⁶ cells/ml or less. Thus, the soup of the soy sauce *moromi* is preferably a soup obtained by removing the insoluble solid content and the soy sauce lactic acid bacterium from the soy sauce *moromi.*

The step of obtaining an unheated soy sauce is a step of obtaining an unheated soy sauce using the soup of the soy sauce *moromi* through yeast fermentation which is employed in a conventionally known method for manufacturing a soy sauce by a brewing process. Examples of the soy sauce yeast include salt-tolerant yeasts such as *Zygosaccharomyces rouxii, Zygosaccharomyces bailii (Z. bailii), Candida etchellsii* and *Candida versatilis (C. versatilis)* and the like.

The yeast fermentation can be performed under conditions which are suitable for the kind and the amount of the soy sauce yeast for a period until the production amount of an alcohol (ethanol) reaches the maximum amount. When the period of the yeast fermentation is too long, however, the decrease amount of phenethyl acetate due to an esterase or the like is larger than the production amount of phenethyl acetate through the yeast fermentation, and the phenethyl acetate content may decrease. Thus, the yeast fermentation is preferably completed before the phenethyl acetate content decreases even before the alcohol concentration reaches the maximum value. A specific example of the yeast fermentation is an embodiment in which the yeast fermentation is performed at room temperature, preferably at 15°C to 30°C, for around five days to 60 days, preferably for around seven days to 45 days, when *Zygosaccharomyces rouxii* is used as the soy sauce yeast.

After the completion of the yeast fermentation, an aging period starts. The yeast fermentation is completed at the point at which the alcohol concentration substantially reaches the maximum value. More specifically, the yeast fermentation is preferably completed at the point at which the average alcohol production rate in the previous 10 days becomes 0.2% (v/v) or less, but a target alcohol concentration may be set in advance. Because the phenethyl acetate content decreases during the aging period, the conditions are that the aging is completed preferably within 30 days at room temperature, preferably at 15°C to 30°C, more preferably within 20 days, further preferably within 10 days. In the steps of manufacturing a soy sauce, it is general that an unheated soy sauce is obtained by pressing the *moromi* after fermentation and aging and that the soy sauce is stored in the state of the unheated soy sauce for a long period. However, the present manufacturing method is an embodiment in which there is no distinction between aging and storage and in which the aging and storage period after the completion of the yeast fermentation is completed under the above conditions.

After the completion of aging, a pasteurization step starts. The step of obtaining a pasteurized soy sauce is a step of obtaining a pasteurized soy sauce by performing pasteurization which is employed in a conventionally known method for manufacturing a soy sauce by a brewing process. The conditions for the pasteurization are conditions under which the phenethyl acetate content does not decrease when the obtained pasteurized soy sauce is stored, namely conditions under which a *koji* mold-derived esterase is inactivated, and examples thereof are conditions at 70°C to 125°C, preferably 70°C to 90°C, for one second to 60 minutes, preferably about one minute to 30 minutes and the like. Moreover, in place of the pasteurization treatment, another treatment which inactivates the *koji* mold-derived esterase (enzyme inactivation treatment) may be performed. Examples of such a treatment include a treatment for removing the *koji* mold-derived esterase and the like, and specific examples thereof include a membrane treatment utilizing a UF membrane and the like. A soy sauce obtainable by subjecting to a UF membrane treatment may be called a pasteurized soy sauce as a soy sauce obtainable by subjecting to a treatment corresponding to the pasteurization treatment or called a UF membrane-treated soy sauce.

The unheated soy sauce before the pasteurization is obtained using the soup of the soy sauce *moromi* from which the insoluble solid content has been removed in advance and thus is a yeast fermented product having a low solid content, and the unheated soy sauce itself may be pasteurized. Moreover, in order to remove the yeast or a residue in the unheated soy sauce or the like, a solid-liquid separation treatment at the latter stage of the yeast fermentation which is used in a method for manufacturing a regular soy sauce, such as pressing, filtration and sediment removal, may be performed before the pasteurization or after the pasteurization.

As described in the Examples described below, the esterase or the like which decreases the phenethyl acetate amount is highly likely to be derived from the soy sauce *koji.* Therefore, the pasteurized soy sauce of an aspect of the invention may be, in addition to one obtained by pasteurizing an unheated soy sauce, one obtained by pasteurizing the soy sauce *moromi* or the soup of the soy sauce *moromi* to inactivate the koji-derived esterase and subsequently performing the yeast fermentation. In this case, in place of the step of obtaining an unheated soy sauce, a step of obtaining a pasteurized soup of the soy sauce *moromi* by pasteurizing the soup of the soy sauce *moromi* and a step of obtaining a pasteurized soy sauce through yeast fermentation using the pasteurized soup of the soy sauce *moromi* are performed. In this case, because the soup of the soy sauce *moromi* is pasteurized, the decrease in phenethyl acetate during the aging period can be suppressed. Thus, as the aging period, an aging period which is employed in a regular method for manufacturing a soy sauce by a brewing process (for example, 10 days to 100 days to one year) can be employed. As the conditions for the pasteurization, the above conditions for the pasteurization can be applied. In this case, the soy sauce obtained after the yeast fermentation is preferably a soy sauce which contains 30 ppb or more of phenethyl acetate and in which the decrease rate of phenethyl acetate after aging at 25°C for one week is 5% or less.

The pasteurized soy sauce of an aspect of the invention can be formed into a container-packed pasteurized soy sauce in which it is packed and sealed in a container. The container is not particularly limited, but examples thereof include packaging containers such as a single-layer or laminate film bag, a retort pouch, a vacuum pack, an aluminum container, a plastic container, a bottle and a can made of a metal such as aluminum, a paper, a plastic such as PET and PTP, a glass or the like. The container-packed pasteurized soy sauce can be distributed and sold in the market independently by itself.

Specific examples of the pasteurized soy sauce of an aspect of the invention are the pasteurized group described in the cases 1 and 2 of Example 1 described below and the like but are not limited thereto. A soy sauce manufactured by the same method as that of the test liquid described in the case 1 of Example 1 has a 2-ethyl-6-methylpyrazine content of 5 ppb or less and an HEMF content of 20 ppm or more.

The pasteurized soy sauce of an aspect of the invention can be used in the same manner as a regular pasteurized soy sauce. That is, the pasteurized soy sauce of an aspect of the invention can be used alone or by mixing or combining with another seasoning component such as a soup stock, an acidulant, an amino acid, a nucleic acid, an organic acid, a protein hydrolysate, a sugar, a sake, a sweet sake, an alcohol, a thickener, an emulsifier and an inorganic salt in addition to a vegetable component, meat, fish, a yeast extract, a meat extract, a fruit juice, a spice, a chemical seasoning or a flavor for a method for cooking and processing various food materials. For example, the pasteurized soy sauce of an aspect of the invention can be used for various foods such as Japanese foods, Western foods and Chinese foods and can be specifically used for deep-fried foods, grilled slices of meat, udon, soba, ramen, Hamburg steak, meatballs, simmered chicken and root vegetables, stewed meat and potatoes, teriyaki, curry, stew, hashed beef, simmered meat and tofu and the like but it is not limited thereto.

A non-limiting specific mode of the pasteurized soy sauce of an aspect of the invention is, for example, a pasteurized soy sauce having the following phenethyl acetate content and the following 2-ethyl-6-methylpyrazine content.
Phenethyl acetate content: 30 ppb to 20,000 ppb
2-Ethyl-6-methylpyrazine content: 0 ppb to less than 20 ppb

A non-limiting specific mode of the pasteurized soy sauce of an aspect of the invention is, for example, a pasteurized soy sauce having the following phenethyl acetate content and the following HEMF content.
Phenethyl acetate content: 30 ppb to 20,000 ppb
HEMF content: 20 ppm to 200 ppm

A non-limiting specific mode of the pasteurized soy sauce of an aspect of the invention is, for example, a pasteurized soy sauce having the following phenethyl acetate content, the following 2-ethyl-6-methylpyrazine content and the following HEMF content.
Phenethyl acetate content: 30 ppb to 20,000 ppb, preferably 30 ppb to 3,000 ppb
2-Ethyl-6-methylpyrazine content: 0 ppb to less than 20 ppb
HEMF content: 20 ppm to 200 ppm

Although the invention will be explained in more detail by way of Examples below, the invention is not limited to these Examples, and the invention can take various modes as long as the object of the invention can be achieved.

### Example 1

### Case 1: Evaluation of Production Behavior of Phenethyl Acetate during Yeast Fermentation

### [1-1. Purpose of Evaluation]

The production behavior of phenethyl acetate during yeast fermentation of a liquid fermented soy sauce was evaluated. Hereinafter, the yeast fermentation method of the invention is liquid fermentation.

### [1-2. Preparation of Test Liquid]

Through the manufacture of a liquid fermented soy sauce shown below, a test liquid was prepared.

A seed starter of *Aspergillus sojae* was inoculated into a mixture of steamed whole soybeans and crushed roasted wheat mixed at a ratio of 6:4, followed by processing for 43 hours by an ordinary method to obtain a soy sauce *koji* (*koji-*making).

Hundred parts by mass of the obtained soy sauce *koji* was put into 116 parts by mass of a saline solution (sodium chloride concentration: 25% (w/v)), and further a soy sauce lactic acid bacterium (*Tetragenococcus halophilus*) was added thereto. Lactic acid fermentation of the resultant for 20 days was performed according to an ordinary method at 15°C to 25°C while appropriately stirring. The soy sauce *moromi* after the completion of the lactic acid fermentation was subjected to a pressing treatment, and the obtained pressed liquid was further subjected to a filtration treatment using diatomaceous earth and a membrane filtration treatment using a UF membrane, whereby obtaining an original liquid fermentation liquid as a soy sauce *moromi* soup.

The original liquid fermentation liquid was put into 250-mL Duran bottles (N=2), and a salt-tolerant soy sauce yeast (*Zygosaccharomyces rouxii*) was inoculated. The bottles were stoppered, and yeast fermentation was performed at 25°C for four weeks. One test group was pasteurized under the conditions at 80°C for 30 minutes, and the other test group was not pasteurized. Thereafter, yeast fermentation was further performed in the same manner for eight weeks. Samples were taken every two weeks and stored at -20°C, and the alcohol, phenethyl acetate, 2-ethyl-6-methylpyrazine and HEMF in the samples were measured 12 weeks after the yeast fermentation. 2-Ethyl-6-methylpyrazine and HEMF were measured according to an ordinary method.

### [1-3. Measurement Method of Phenethyl Acetate]

By a headspace-solid phase microextraction (HS-SPME) method, the aroma components in the gas phase were adsorbed to the fibers. As the SPME fibers, Divinylbenzen/Carboxen/Polydimethylsiloxane (DVB/CAR/PDMS) fibers (75 mm, DVB/CAR/PDMS, fused silica, 24Ga; Merck) were used. The equilibrium conditions were at 40°C for five minutes, and the adsorption conditions were the conditions at 40°C for 20 minutes.

The captured aroma components were introduced into GC-MS "GCMS QP-2010 Ultra" (manufactured by Shimadzu Corporation) with an autosampler "AOC5000" (manufactured by Shimadzu Corporation) and analyzed. The analysis was performed with n=4. The conditions for GC/MS were as follows.
Measurement mode: Scan
Column: DB WAX 60×0.25 mm, i.d.0.25 µm (Agilent)
Carrier gas: helium
Linear velocity: 40 cm/min
Oven temperature: 40°C (hold 3 minutes) → 5°C/minute → 110°C → 10°C/minute → 240°C (hold 5 minutes)
Ion source temperature: 240°C
Transfer tube temperature: 240°C
Ionization mode: EI
Mass range: 30 m/z to 250 m/z
Measurement period: 2 minutes to 35 minutes
Target ion of phenethyl acetate: 104 m/z

The peak area of phenethyl acetate was calculated by GC-MS as described above. The peak area was corrected using LOWESS smoothing from the results of analyzing a quality control mixed with the equivalent amount of the sample to be analyzed.

### [1-4. Quantification Method of Alcohol]

The alcohol (ethanol) was measured according to an ordinary method by GC-FID under the following conditions.

### <GC-FID Analysis Conditions>

Measuring device: GC-2014AF (manufactured by Shimadzu Corporation)
Column: porapack q (80-100 mesh) (manufactured by GL Sciences, Inc.)
Inlet temperature: 230°C
Temperature condition: held at 155°C (7 min)
Carrier gas: nitrogen
Linear velocity: 20 mL/min
Detector temperature: 250°C

### [1-5. Evaluation Results]

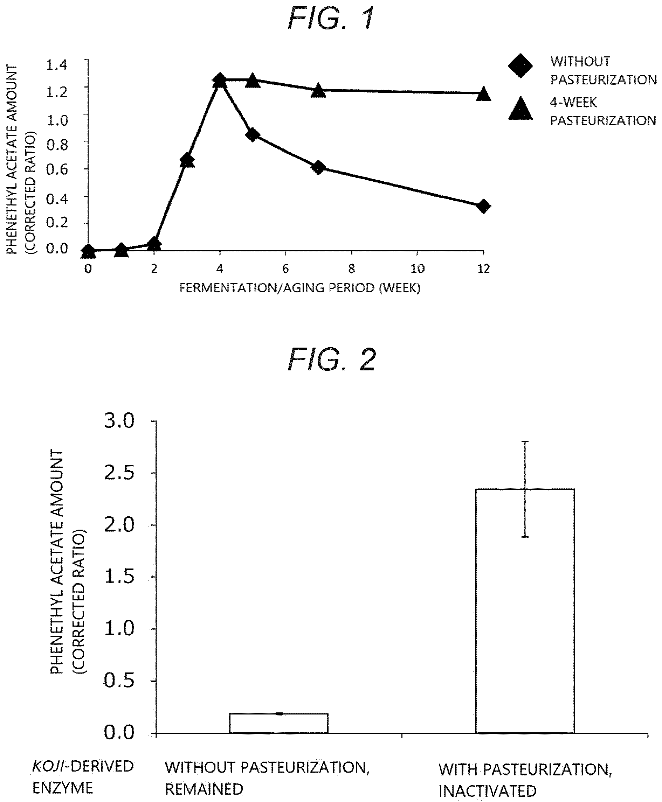

The measurement results of phenethyl acetate of the samples are shown in Fig. 1. As shown in Fig. 1, the amount of phenethyl acetate increased until four weeks after starting the fermentation. The phenethyl acetate content after four weeks was 229 ppb, and the 2-ethyl-6-methylpyrazine content was 1.9 ppb. The HEMF content was 84 ppm, and the alcohol content was 2.1%.

Thereafter, the phenethyl acetate content decreased remarkably in the test group without the pasteurization. On the other hand, in the test group with the pasteurization, the decrease in the phenethyl acetate content was suppressed, but the phenethyl acetate content did not increase. In this regard, the final phenethyl acetate content of the test group without the pasteurization was 21.5 ppb.

From the above results, the following findings were made: in yeast fermentation using the original liquid fermentation liquid, the phenethyl acetate content increases for four weeks after starting the fermentation; the decrease amount of phenethyl acetate due to a degrading enzyme exceeds the production amount of phenethyl acetate through the yeast fermentation four weeks after starting the fermentation and later; and the phenethyl acetate content can be maintained by pasteurizing four weeks after starting the fermentation. Moreover, as a result, it was found that the yeast fermentation period is preferably around four weeks in order to obtain a soy sauce containing a high concentration of phenethyl acetate.

### Case 2: Evaluation of Suppression of Decrease in Phenethyl Acetate due to Timing of Pasteurization

### [2-1. Purpose of Evaluation]

The suppression of the decrease in phenethyl acetate through yeast fermentation after inactivating the soy sauce *koji,* the lactic acid bacterium-derived esterase and the like through pasteurization of an original liquid fermentation liquid after lactic acid fermentation was evaluated.

### [2-2. Evaluation Method]

An original liquid fermentation liquid was obtained in the same manner as in 1-2 above.

The obtained original liquid fermentation liquid was put into 200-mL Duran bottles after pasteurization under the conditions at 80°C for 30 minutes, and a salt-tolerant soy sauce yeast (*Zygosaccharomyces rouxii*) was inoculated. The bottles were stoppered, and yeast fermentation was performed at 25°C for four weeks (pasteurized group). A group which was obtained through yeast fermentation in the same manner except that the pasteurization was not performed was used as an untreated group. The phenethyl acetate contents of the samples of the pasteurized group and the untreated group were measured (analysis with N=4).

### [2-3. Evaluation Results]

The measurement results of phenethyl acetate of the samples are shown in Fig. 2.

As shown in Fig. 2, the amount of phenethyl acetate of the pasteurized group was 10 times or more higher than that of the untreated group. From the results, it was found that the esterase and the like in a liquid fermented soy sauce are highly likely to be derived from the soy sauce *koji.* Accordingly, it was found that the amount of phenethyl acetate is increased by inactivating the esterase and the like either before or after the yeast fermentation of the original liquid fermentation liquid.

### Case 3: Evaluation of Degrading Activity of Koji-Derived Enzyme on Phenethyl Acetate

### [3-1. Purpose of Evaluation]

The degrading activities of original liquid fermentation liquids on phenethyl acetate were evaluated.

### [3-2. Evaluation Method]

To a 100-ml volumetric flask, 1 g of phenethyl acetate having a purity of 98% (manufactured by Sigma-Aldrich) was put, and 95% ethanol was added to the gauge line to prepare an original phenethyl acetate liquid (1 g/100 ml). Subsequently, the original phenethyl acetate liquid was diluted with water in such a manner that the volumes of the phenethyl acetate solutions to be added to the test soy sauces described below would all become 100 µl and that the phenethyl acetate contents based on the test soy sauces would become a predetermined concentration, and thus phenethyl acetate solutions were prepared.

The phenethyl acetate solutions were added to original liquid fermentation liquids in such a manner that the phenethyl acetate content would become 30 ppb. For the original liquid fermentation liquids, two different strains of *Aspergillus sojae* (strain A and strain B) were used as seed *koji* starters.

The original liquid fermentation liquid of each group was divided into two. One was pasteurized under the conditions at 80°C for 30 minutes and then subjected to an incubation treatment at 25°C for 24 hours (pasteurized group), and the other was subjected to an incubation treatment at 25°C for 24 hours without the pasteurization (untreated group).

The phenethyl acetate contents of the strain A pasteurized group, the strain A untreated group, the strain B pasteurized group and the strain B untreated group after the incubation treatment were measured.

### [3-3. Evaluation Results]

The measurement results of phenethyl acetate of the test groups and the results of the degradation rates (decrease rates) calculated based on the phenethyl acetate content before the incubation (30 ppb) are shown in Table 1.

**[Table 1]**

| Test Group | | Untreated | Pasteurized |
|---|---|---|---|
| Strain A Group | Content | 1.2 ppb | 31 ppb |
| | Degradation Rate | 96% | 0% |
| Strain B Group | Content | 17 ppb | 33 ppb |
| | Degradation Rate | 43% | 0% |

As Table 1 shows, it was found that, although the degrading activities of the strain A group and the strain B group on phenethyl acetate were different, 40% or more of phenethyl acetate was degraded in both groups. It was found that, through the pasteurization, the degradation of phenethyl acetate could be suppressed in both groups.

From the results, it was found that an original liquid fermentation liquid and a pasteurized soy sauce in which the decrease rate of phenethyl acetate after storing at 25°C for 24 hours is 30% or less are obtained by pasteurizing the original yeast fermentation liquid.

### Case 4: Evaluation of Degrading Activity on Phenethyl Acetate during Aging Period

### [4-1. Purpose of Evaluation]

The degrading activity on phenethyl acetate during an aging period was evaluated.

### [4-2. Evaluation Method]

An original liquid fermentation liquid was put into 250-mL Duran bottles (N=2), and a salt-tolerant soy sauce yeast (*Zygosaccharomyces rouxii*) was inoculated. The bottles were stoppered, and yeast fermentation was performed at 25°C for four weeks. From the production amounts of the alcohol and phenethyl acetate at this point, it was decided that the yeast fermentation period was completed, and the phenethyl acetate amount after starting the aging period was measured where the subsequent period was considered as the aging period.

### [4-3. Evaluation Results]

The measurement results of phenethyl acetate after certain aging periods are shown in Table 2.

**[Table 2]**

| | | | | |
|---|---|---|---|---|
| Aging Period (weeks) | 0 | 1 | 3 | 8 |
| Phenethyl Acetate Amount (Corrected Ratio) | 1.25 | 0.85 | 0.61 | 0.32 |
| Decrease Rate (%/week) | - | 32.2 | 14.1 | 9.3 |

As Table 2 shows, it was found that, although there was a tendency towards a decrease in the degrading activity on phenethyl acetate in the soy sauce after starting the aging period, the decrease rate per week was not lower than 5%. In this regard, as shown in Fig. 1, phenethyl acetate in the soy sauce does not decrease after pasteurization.

From the results, it was found that a pasteurized soy sauce in which the decrease rate of phenethyl acetate after aging at 25°C for one week is 5% or less is obtained.

### Example 2

### Case 1: Evaluation of Influence on Flavor of Soy Sauce

### [1-1. Preparation of Test Soy Sauces]

To a 100-ml volumetric flask, 1 g of phenethyl acetate having a purity of 98% (manufactured by Sigma-Aldrich) was put, and 95% ethanol was added to the gauge line to prepare an original phenethyl acetate liquid (1 g/100 ml). Subsequently, the original phenethyl acetate liquid was diluted with water in such a manner that the volumes of the phenethyl acetate solutions to be added to the test soy sauces described below would all become 100 µl and that the phenethyl acetate contents based on the test soy sauces would become predetermined concentrations, and thus phenethyl acetate solutions were prepared.

A soy sauce and a phenethyl acetate solution were mixed and dissolved by stirring in such a manner that the phenethyl acetate content would become 0 ppb (without addition), 30 ppb and 50 ppb, and thus 100 ml of test soy sauces were prepared. As the soy sauce, "Kikkoman *Tokusen Marudaizu* Soy Sauce" (manufactured by Kikkoman Corporation), from which phenethyl acetate was not detected, was used.

The prepared test soy sauces were subjected to the treatments of the tests 1 to 3 below. That is, in the test 1, after the temperature reached 80°C in a water bath, the prepared test soy sauces were cooled rapidly in ice and maintained at about 25°C. In the test 2, the test soy sauces were stored in an incubator at 60°C for two days. In the test 3, the prepared test soy sauces were stored in an incubator at 5°C for two days.

### [1-2. Sensory Evaluation Method]

With respect to the test soy sauces of the test groups, analysts (five analysts of A to E) who were excellent in distinguishing the flavors of soy sauces were asked to eat the test soy sauces with a spoon at room temperature of about 25°C, and the intensities of the heat-deteriorated smell, the soy sauce aroma and the harsh taste which came up from the inside of the mouth to the nose upon eating were evaluated.

The "heat-deteriorated smell" was defined as an unpleasant smell and a steamed smell (a smell with a damp feeling in the nose) which are peculiar to a soy sauce heated at a high temperature and which are felt when taken into the mouth. The "soy sauce aroma" was defined as a fresh fruity aroma inherent in a soy sauce which is felt with a pasteurized soy sauce which has not been subjected to a heating treatment (namely, a commercial soy sauce) when taken into the mouth. The "harsh taste" was defined as an astringent taste-like flavor which remains in the mouth after eating.

In the sensory evaluation, the intensities of the evaluation items of the test soy sauces were evaluated on the nine-point scale below using a test soy sauce without the addition of phenethyl acetate as an evaluation standard ("0"). Before performing the sensory test, the analysts participated in a discussion on the flavors of soy sauces and an evaluation training. Specifically, the analysts discussed the characteristics of the flavors of soy sauces to agree about the evaluation so that the analysts had the same understandings. Moreover, to secure the validity of the sensory test, the analysts participated in an evaluation training using some test soy sauces, and the reproducibility of evaluation of each analyst was checked. After performing these procedures, the flavors of the test soy sauces were evaluated using the analysts.
- 4: Felt extremely weakly compared to the evaluation standard.
- 3: Felt very weakly compared to the evaluation standard.
- 2: Felt weakly compared to the evaluation standard.
- 1: Felt slightly weakly compared to the evaluation standard.
   0: Felt the same as the evaluation standard.
   1: Felt slightly strongly compared to the evaluation standard.
   2: Felt strongly compared to the evaluation standard.
   3: Felt very strongly compared to the evaluation standard.
   4: Felt extremely strongly compared to the evaluation standard.

### [1-3. Sensory Evaluation Results]

The results of the sensory evaluation of the evaluation items "heat-deteriorated smell", "soy sauce aroma" and "harsh taste" of the test soy sauces are shown in Table 3A to Table 3C.

**[Table 3A]**

| Test 1 | Heat-Deteriorated Smell | | | Soy Sauce Aroma | | | Harsh Taste | | |
|---|---|---|---|---|---|---|---|---|---|
| Phenethyl Acetate Concentration (ppb) | 0.0 | 30 | 50 | 0.0 | 30 | 50 | 0.0 | 30 | 50 |
| Analyst A | 0.0 | -1.0 | -2.0 | 0.0 | 3.0 | 4.0 | 0.0 | -1.0 | -2.0 |
| Analyst B | 0.0 | -2.0 | -2.0 | 0.0 | 1.0 | 2.0 | 0.0 | -1.0 | -2.0 |
| Analyst C | 0.0 | -3.0 | -4.0 | 0.0 | 1.0 | 2.0 | 0.0 | -3.0 | -4.0 |
| Analyst D | 0.0 | -1.0 | -2.0 | 0.0 | 0.0 | 1.0 | 0.0 | -2.0 | -2.0 |
| Analyst E | 0.0 | -2.0 | -3.0 | 0.0 | 1.0 | 2.0 | 0.0 | -1.0 | -3.0 |
| Average | 0.0 | -1.8 | -2.6 | 0.0 | 1.2 | 2.2 | 0.0 | -1.6 | -2.6 |

**[Table 3B]**

| Test 2 | Heat-Deteriorated Smell | | | Soy Sauce Aroma | | | Harsh Taste | | |
|---|---|---|---|---|---|---|---|---|---|
| Phenethyl Acetate Concentration (ppb) | 0.0 | 30 | 50 | 0.0 | 30 | 50 | 0.0 | 30 | 50 |
| Analyst A | 0.0 | -2.0 | -3.0 | 0.0 | 1.0 | 3.0 | 0.0 | -1.0 | -4.0 |
| Analyst B | 0.0 | -1.0 | -2.0 | 0.0 | 2.0 | 2.0 | 0.0 | -1.0 | -2.0 |
| Analyst C | 0.0 | -3.0 | -4.0 | 0.0 | 1.0 | 2.0 | 0.0 | -3.0 | -4.0 |
| Analyst D | 0.0 | -2.0 | -3.0 | 0.0 | 1.0 | 1.0 | 0.0 | -2.0 | -3.0 |
| Analyst E | 0.0 | -2.0 | -3.0 | 0.0 | 1.0 | 2.0 | 0.0 | -2.0 | -3.0 |
| Average | 0.0 | -2.0 | -3.0 | 0.0 | 1.2 | 2.0 | 0.0 | -1.8 | -3.2 |

**[Table 3C]**

| Test 3 | Heat-Deteriorated Smell | | | Soy Sauce Aroma | | | Harsh Taste | | |
|---|---|---|---|---|---|---|---|---|---|
| Phenethyl Acetate Concentration (ppb) | 0.0 | 30 | 50 | 0.0 | 30 | 50 | 0.0 | 30 | 50 |
| Analyst A | 0.0 | 0.0 | 0.0 | 0.0 | 1.0 | 1.0 | 0.0 | -1.0 | -1.0 |
| Analyst B | 0.0 | 0.0 | 0.0 | 0.0 | 0.0 | 0.0 | 0.0 | 0.0 | 0.0 |
| Analyst C | 0.0 | 0.0 | 0.0 | 0.0 | 0.0 | 0.0 | 0.0 | 0.0 | 0.0 |
| Analyst D | 0.0 | 0.0 | 0.0 | 0.0 | 0.0 | 1.0 | 0.0 | -1.0 | -1.0 |
| Analyst E | 0.0 | 0.0 | 0.0 | 0.0 | 1.0 | 1.0 | 0.0 | 0.0 | -1.0 |
| Average | 0.0 | 0.0 | 0.0 | 0.0 | 0.4 | 0.6 | 0.0 | -0.4 | -0.6 |

As shown in Table 3A to Table 3C, with respect to the test soy sauces with the addition of phenethyl acetate in the tests 1 and 2, in which the test soy sauces were subjected to the heating treatment, the soy sauce aroma was felt strongly, and the heat-deteriorated smell and the harsh taste reduced as compared to the test soy sauces without the addition of phenethyl acetate used as the evaluation standards.

Moreover, with respect to the test soy sauces with the addition of phenethyl acetate in the test 3, in which the test soy sauces were stored without subjecting to a heating treatment, the soy sauce aroma was felt slightly strongly, and the harsh taste reduced as compared to the test soy sauce without the addition of phenethyl acetate. In this case, the heat-deteriorated smell was not felt from any of the test soy sauces.

From the above results, it was found that phenethyl acetate has an effect of improving the flavor of a soy sauce and an effect of suppressing deterioration of the flavor of a soy sauce.

### Case 2: Evaluation of Influence on Fruit Juice Aroma in Ponzu (1)

### [2-1. Preparation of Test Ponzus]

To a 100-ml volumetric flask, 1 g of phenethyl acetate having a purity of 98% (manufactured by Sigma-Aldrich) was put, and 95% ethanol was added to the gauge line to prepare an original phenethyl acetate liquid (1 g/100 ml). Subsequently, the original phenethyl acetate liquid was diluted with water in such a manner that the volumes of the phenethyl acetate solutions to be added to the test *ponzus* described below would all become 100 µl and that the phenethyl acetate contents based on the test *ponzus* would become predetermined concentrations, and thus phenethyl acetate solutions were prepared.

A soy sauce, *yuzu* juice, vinegar, table sugar, glutamic acid, water and a phenethyl acetate solution in the blending amounts shown in Table 4 below were put into a stainless-steel tube and mixed and dissolved by stirring at about 40°C, and thus 100 ml of test *ponzus* were prepared. As the soy sauce, "Kikkoman *Tokusen Marudaizu* Soy Sauce" (manufactured by Kikkoman Corporation), from which phenethyl acetate was not detected, was used. As the *yuzu* juice, an unheated packed product of straight fruit juice was used. Regarding the phenethyl acetate concentration, the case in which phenethyl acetate is 10 ppb means that the amount of phenethyl acetate is 1,000 ng based on 100 ml of the test *ponzu.*

The prepared test *ponzus* were used as test *ponzus* 1-1 to 8-1 as test *ponzus* before heating. Test *ponzus* which were obtained by rapidly cooling the test *ponzus* 1-1 to 8-1 in ice and maintaining at about 25°C after the temperature reached 80°C in a water bath were used as test *ponzus* 1-2 to 8-2, respectively, as test *ponzus* after heating.

**[Table 4]**

| (Before Heating) | Test *Ponzu* 1-1 | Test *Ponzu* 2-1 | Test *Ponzu* 3-1 | Test *Ponzu* 4-1 | Test *Ponzu* 5-1 | Test *Ponzu* 6-1 | Test *Ponzu* 7-1 | Test *Ponzu* 8-1 |
|---|---|---|---|---|---|---|---|---|
| (After Heating) | Test *Ponzu* 1-2 | Test *Ponzu* 2-2 | Test *Ponzu* 3-2 | Test *Ponzu* 4-2 | Test *Ponzu* 5-2 | Test *Ponzu* 6-2 | Test *Ponzu* 7-2 | Test *Ponzu* 8-2 |
| Soy Sauce | 30.0 ml | 30.0 ml | 30.0 ml | 30.0 ml | 30.0 ml | 30.0 ml | 30.0 ml | 30.0 ml |
| Fruit Juice (*Yuzu*) | 20.0 g | 20.0 g | 20.0 g | 20.0 g | 20.0 g | 20.0 g | 20.0 g | 20.0 g |
| Vinegar | 5.0 ml | 5.0 ml | 5.0 ml | 5.0 ml | 5.0 ml | 5.0 ml | 5.0 ml | 5.0 ml |
| Table Sugar | 10.0 g | 10.0 g | 10.0 g | 10.0 g | 10.0 g | 10.0 g | 10.0 g | 10.0 g |
| Glutamic Acid | 1.0 g | 1.0 g | 1.0 g | 1.0 g | 1.0 g | 1.0 g | 1.0 g | 1.0 g |
| Water | Balance | Balance | Balance | Balance | Balance | Balance | Balance | Balance |
| Phenethyl Acetate Solution | 0 µl | 100 µl | 100 µl | 100 µl | 100 µl | 100 µl | 100 µl | 100 µl |
| Total | 100 ml | 100 ml | 100 ml | 100 ml | 100 ml | 100 ml | 100 ml | 100 ml |
| Phenethyl Acetate Concentration (Based on Test *Ponzu*) | 0 ppb | 2 ppb | 5 ppb | 100 ppb | 500 ppb | 1000 ppb | 2000 ppb | 5000 ppb |
| Phenethyl Acetate Concentration (Based on Fruit Juice) | 0 ppb | 10 ppb | 25 ppb | 500 ppb | 2500 ppb | 5000 ppb | 10000 ppb | 25000 ppb |

### [2-2. Sensory Evaluation Method]

With respect to the test *ponzus* 1-1 to 8-1 and the test *ponzus* 1-2 to 8-2, analysts (three analysts A to C) who were excellent in distinguishing fruit juice flavors and aromas were asked to eat the test *ponzus* with a spoon at room temperature of about 25°C and took the smells.

The evaluation items were "fruit juice flavor", "acid taste" and "off-taste" upon eating and "fresh citrus aroma" upon smelling.

The "fruit juice flavor" was defined as a fruit juice flavor which is felt when the test *ponzu* is eaten and taken into the mouth. The "acid taste" was defined as a sour taste which is felt with the tongue when the test *ponzu* is eaten and taken into the mouth. The "off-taste" was defined as either taste of an astringent taste and bitterness (peel-like taste) which are felt with the tongue when the test *ponzu* is eaten and taken into the mouth. The "fresh citrus aroma" was defined as a grassy-smelling sour aroma which generates when a citrus is squeezed and which is felt at a relatively early stage only with the nose without taking the test *ponzu* into the mouth.

In the sensory evaluation, the intensities of the evaluation items of the test *ponzus* were evaluated on the nine-point scale below using the test *ponzu* 1-2 after heating without the addition of phenethyl acetate as the evaluation standard ("0"). Before performing the sensory test, the analysts participated in a discussion on fruit juice flavors and aromas and an evaluation training. Specifically, the analysts discussed the characteristics of fruit juice flavors and aromas to agree about the evaluation so that the analysts had the same understandings. Moreover, to secure the validity of the sensory test, the analysts participated in an evaluation training using some test *ponzus,* and the reproducibility of evaluation of each analyst was checked. After performing these procedures, the fruit juice flavors and aromas of the test *ponzus* were evaluated using the analysts.
- 4: Felt extremely weakly compared to the evaluation standard.
- 3: Felt very weakly compared to the evaluation standard.
- 2: Felt weakly compared to the evaluation standard.
- 1: Felt slightly weakly compared to the evaluation standard.
   0: Felt the same as the evaluation standard.
   1: Felt slightly strongly compared to the evaluation standard.
   2: Felt strongly compared to the evaluation standard.
   3: Felt very strongly compared to the evaluation standard.
   4: Felt extremely strongly compared to the evaluation standard.

### [2-3. Sensory Evaluation Results]

The results of the sensory evaluation of the evaluation items "fruit juice flavor", "off-taste" and "fresh citrus aroma" of the test *ponzus* are shown in Table 5A to Table 5C. No significant difference was observed among the test *ponzus* regarding the evaluation item "acid taste".

**[Table 5A]**

| (Before Heating) | | Test *Ponzu* 1-1 | Test *Ponzu* 2-1 | Test *Ponzu* 3-1 | Test *Ponzu* 4-1 | Test *Ponzu* 5-1 | Test *Ponzu* 6-1 | Test *Ponzu* 7-1 | Test *Ponzu* 8-1 |
|---|---|---|---|---|---|---|---|---|---|
| Phenethyl Acetate Concentration (Based on Test *Ponzu*) | | 0 ppb | 2 ppb | 5 ppb | 100 ppb | 500 ppb | 1000 ppb | 2000 ppb | 5000 ppb |
| Phenethyl Acetate Concentration (Based on Fruit Juice) | | 0 ppb | 10 ppb | 25 ppb | 500 ppb | 2500 ppb | 5000 ppb | 10000 ppb | 25000 ppb |
| Fruit Juice Flavor | Analyst A | 3 | 3 | 3 | 3 | 3 | 4 | 4 | N.D. |
| | Analyst B | 3 | 3 | 3 | 3 | 3 | 4 | 4 | N.D. |
| | Analyst C | 3 | 3 | 3 | 3 | 3 | 4 | 4 | N.D. |
| | Average | 3.0 | 3.0 | 3.0 | 3.0 | 3.0 | 4.0 | 4.0 | N.D. |

| (After Heating) | | Test *Ponzu* 1-2 | Test *Ponzu* 2-2 | Test *Ponzu* 3-2 | *Test Ponzu* 4-2 | Test *Ponzu* 5-2 | Test *Ponzu* 6-2 | Test *Ponzu* 7-2 | Test *Ponzu* 8-2 |
|---|---|---|---|---|---|---|---|---|---|
| Phenethyl Acetate Concentration (Based on Test *Ponzu*) | | 0 ppb | 2 ppb | 5 ppb | 100 ppb | 500 ppb | 1000 ppb | 2000 ppb | 5000 ppb |
| Phenethyl Acetate Concentration (Based on Fruit Juice) | | 0 ppb | 10 ppb | 25 ppb | 500 ppb | 2500 ppb | 5000 ppb | 10000 ppb | 25000 ppb |
| Fruit Juice Flavor | Analyst A | - | 1 | 2 | 3 | 3 | 3 | 3 | N.D. |
| | Analyst B | - | 1 | 2 | 3 | 3 | 3 | 3 | N.D. |
| | Analyst C | - | 1 | 1 | 3 | 3 | 3 | 3 | N.D. |
| | Average | - | 1.0 | 1.7 | 3.0 | 3.0 | 3.0 | 3.0 | N.D. |

**[Table 5B]**

| (Before Heating) | | Test *Ponzu* 1-1 | Test *Ponzu* 2-1 | Test *Ponzu* 3-1 | Test *Ponzu* 4-1 | Test *Ponzu* 5-1 | Test *Ponzu* 6-1 | Test *Ponzu* 7-1 | Test *Ponzu* 8-1 |
|---|---|---|---|---|---|---|---|---|---|
| Phenethyl Acetate Concentration (Based on Test *Ponzu*) | | 0 ppb | 2 ppb | 5 ppb | 100 ppb | 500 ppb | 1000 ppb | 2000 ppb | 5000 ppb |
| Phenethyl Acetate Concentration (Based on Fruit Juice) | | 0 ppb | 10 ppb | 25 ppb | 500 ppb | 2500 ppb | 5000 ppb | 10000 ppb | 25000 ppb |
| Off-Taste | Analyst A | 0 | 0 | 0 | 0 | 0 | 0 | 0 | N.D. |
| | Analyst B | 0 | 0 | 0 | 0 | 0 | 0 | 0 | N.D. |
| | Analyst C | 0 | 0 | 0 | 0 | 0 | 0 | 0 | N.D. |
| | Average | 0.0 | 0.0 | 0.0 | 0.0 | 0.0 | 0.0 | 0.0 | N.D. |

| (After Heating) | | Test *Ponzu* 1-2 | Test *Ponzu* 2-2 | Test *Ponzu* 3-2 | Test *Ponzu* 4-2 | Test *Ponzu* 5-2 | Test *Ponzu* 6-2 | Test *Ponzu* 7-2 | Test *Ponzu* 8-2 |
|---|---|---|---|---|---|---|---|---|---|
| Phenethyl Acetate Concentration (Based on Test *Ponzu*) | | 0 ppb | 2 ppb | 5 ppb | 100 ppb | 500 ppb | 1000 ppb | 2000 ppb | 5000 ppb |
| Phenethyl Acetate Concentration (Based on Fruit Juice) | | 0 ppb | 10 ppb | 25 ppb | 500 ppb | 2500 ppb | 5000 ppb | 10000 ppb | 25000 ppb |
| Off-Taste | Analyst A | - | 0 | -1 | -2 | -2 | -2 | -2 | N.D. |
| | Analyst B | - | -1 | -2 | -2 | -2 | -2 | -2 | N.D. |
| | Analyst C | - | 0 | -1 | -2 | -2 | -2 | -2 | N.D. |
| | Average | - | -0.3 | -1.3 | -2.0 | -2.0 | -2.0 | -2.0 | N.D. |

**[Table 5C]**

| (Before Heating) | | Test *Ponzu* 1-1 | Test *Ponzu* 2-1 | Test *Ponzu* 3-1 | Test *Ponzu* 4-1 | Test *Ponzu* 5-1 | Test *Ponzu* 6-1 | Test *Ponzu* 7-1 | Test *Ponzu* 8-1 |
|---|---|---|---|---|---|---|---|---|---|
| Phenethyl Acetate Concentration (Based on Test *Ponzu*) | | 0 ppb | 2 ppb | 5 ppb | 100 ppb | 500 ppb | 1000 ppb | 2000 ppb | 5000 ppb |
| Phenethyl Acetate Concentration (Based on Fruit Juice) | | 0 ppb | 10 ppb | 25 ppb | 500 ppb | 2500 ppb | 5000 ppb | 10000 ppb | 25000 ppb |
| Fresh Citrus Aroma | Analyst A | 2 | 3 | 3 | 3 | 3 | 3 | 4 | N.D. |
| | Analyst B | 2 | 2 | 3 | 3 | 3 | 3 | 4 | N.D. |
| | Analyst C | 3 | 2 | 3 | 3 | 3 | 3 | 4 | N.D. |
| | Average | 2.3 | 2.3 | 3.0 | 3.0 | 3.0 | 3.0 | 4.0 | N.D. |

| (After Heating) | | Test *Ponzu* 1-2 | Test *Ponzu* 2-2 | Test *Ponzu* 3-2 | Test *Ponzu* 4-2 | Test *Ponzu* 5-2 | Test *Ponzu* 6-2 | Test *Ponzu* 7-2 | Test *Ponzu* 8-2 |
|---|---|---|---|---|---|---|---|---|---|
| Phenethyl Acetate Concentration (Based on Test *Ponzu*) | | 0 ppb | 2 ppb | 5 ppb | 100 ppb | 500 ppb | 1000 ppb | 2000 ppb | 5000 ppb |
| Phenethyl Acetate Concentration (Based on Fruit Juice) | | 0 ppb | 10 ppb | 25 ppb | 500 ppb | 2500 ppb | 5000 ppb | 10000 ppb | 25000 ppb |
| Fresh Citrus Aroma | Analyst A | - | 0 | 1 | 3 | 3 | 3 | 3 | N.D. |
| | Analyst B | - | 1 | 2 | 3 | 3 | 3 | 3 | N.D. |
| | Analyst C | - | 0 | 1 | 3 | 3 | 3 | 3 | N.D. |
| | Average | - | 0.3 | 1.3 | 3.0 | 3.0 | 3.0 | 3.0 | N.D. |

As shown in Table 5A to Table 5C, with respect to the test *ponzus* 2-2 to 7-2 after heating with the addition of phenethyl acetate, the fruit juice flavor and the fresh citrus aroma were felt strongly, and the off-taste reduced compared to the test *ponzu* 1-2 after heating without the addition of phenethyl acetate used as the evaluation standard. Moreover, through the comparison between the test *ponzu* 1-1 and the test *ponzu* 1-2 without the addition of phenethyl acetate, it was found that the favorable aroma was impaired by heating. When the results are combined, it was found that deterioration of the aroma of fruit juice by heating can be suppressed by adding phenethyl acetate to *a ponzu.*

From the test results of the test *ponzus* 1-1 to 7-1 before heating, it was found that the aroma improves by adding a higher amount of phenethyl acetate as compared to one without the addition of phenethyl acetate. The test *ponzus* 8-1 and 8-2, in which the concentration of added phenethyl acetate was 5,000 ppb, however, had a flower-like aroma as a whole probably due to the rose aroma of phenethyl acetate, and the sensory evaluation could not be performed. When the test *ponzu* 8-2 was put on boiled tofu and eaten, the flower-like aroma was still remarkable and uncomfortable, and it was found that the test *ponzu* 8-2 is not suitable as *a ponzu.*

From the above results, it was found that phenethyl acetate has an effect of improving the aroma of fruit juice and an effect of suppressing deterioration of the aroma of fruit juice by heating.

### Case 3: Evaluation of Influence on Fruit Juice Aroma in Ponzu (2)

### [3-1. Preparation of Test Ponzus]

*Test ponzus* 9-1 to 13-1 and 9-2 to 13-2 after heating were obtained in the same manner as in the case 2 except that the blending amounts shown in Table 6 below were used. The test *ponzus* were packed in 100-ml transparent bottles. The test *ponzus* 9-1 to 13-1 and the test *ponzus* 9-2 to 13-2 were stored for 15 days under the conditions at 5°C and under the conditions at 40°C, respectively. When the pH values of the test *ponzus* were measured, the pH values of all the test *ponzus* were within the range of 3.87 to 3.90.

**[Table 6]**

| (Storage at 5°C) | Test *Ponzu* 9-1 | Test *Ponzu* 10-1 | Test *Ponzu* 11-1 | Test *Ponzu* 12-1 | Test *Ponzu* 13-1 |
|---|---|---|---|---|---|
| (Storage at 40°C) | Test *Ponzu* 9-2 | Test *Ponzu* 10-2 | Test *Ponzu* 11-2 | Test *Ponzu* 12-2 | Test *Ponzu* 13-2 |
| Soy Sauce | 30.0 ml | 30.0 ml | 30.0 ml | 30.0 ml | 30.0 ml |
| Fruit Juice (*Yuzu*) | 20.0 g | 20.0 g | 20.0 g | 20.0 g | 20.0 g |
| Vinegar | 5.0 ml | 5.0 ml | 5.0 ml | 5.0 ml | 5.0 ml |
| Table Sugar | 10.0 g | 10.0 g | 10.0 g | 10.0 g | 10.0 g |
| Glutamic Acid | 1.0 g | 1.0 g | 1.0 g | 1.0 g | 1.0 g |
| Water | Balance | Balance | Balance | Balance | Balance |
| Phenethyl Acetate Solution | 0 µl | 100 µl | 100 µl | 100 µl | 100 µl |
| Total | 100 ml | 100 ml | 100 ml | 100 ml | 100 ml |
| Phenethyl Acetate Concentration (Based on Test *Ponzu*) | 0 ppb | 1 ppb | 10 ppb | 50 ppb | 100 ppb |
| Phenethyl Acetate Concentration (Based on Fruit Juice) | 0 ppb | 5 ppb | 50 ppb | 250 ppb | 500 ppb |

### [3-2. Sensory Evaluation Method]

In the same manner as in the case 2, "fruit juice flavor", "acid taste", "off-taste" and "fresh citrus aroma" of the test *ponzus* 9-1 to 13-1 and the test *ponzus* 9-2 to 13-2 were tested by sensory evaluation. The evaluation standard was the test *ponzu* 9-1, which was a product stored at 5°C without the addition of phenethyl acetate.

### [3-3. Sensory Evaluation Results]

The results of the sensory evaluation of the evaluation items "fruit juice flavor", "off-taste" and "fresh citrus aroma" of the test *ponzus* are shown in Table 7A to Table 7C. No significant difference was observed among the test *ponzus* in the evaluation item "acid taste".

**[Table 7A]**

| (Storage at 5°C) | | Test *Ponzu* 9-1 | Test *Ponzu* 10-1 | Test *Ponzu* 11-1 | Test *Ponzu* 12-1 | Test *Ponzu* 13-1 |
|---|---|---|---|---|---|---|
| Phenethyl Acetate Concentration (Based on Test *Ponzu)* | | 0 ppb | 1 ppb | 10 ppb | 50 ppb | 100 ppb |
| Phenethyl Acetate Concentration (Based on Fruit Juice) | | 0 ppb | 5 ppb | 50 ppb | 250 ppb | 500 ppb |
| Fruit Juice Flavor | Analyst A | | 0 | 1 | 2 | 3 |
| | Analyst B | | 0 | 1 | 2 | 3 |
| | Analyst C | | 0 | 2 | 3 | 3 |
| | Average | | 0.0 | 1.3 | 2.3 | 3.0 |

| (Storage at 40°C) | | Test *Ponzu* 9-2 | Test *Ponzu* 10-2 | Test *Ponzu* 11-2 | *Test Ponzu* 12-2 | Test *Ponzu* 13-2 |
|---|---|---|---|---|---|---|
| Phenethyl Acetate Concentration (Based on Test *Ponzu)* | | 0 ppb | 1 ppb | 10 ppb | 50 ppb | 100 ppb |
| Phenethyl Acetate Concentration (Based on Fruit Juice) | | 0 ppb | 5 ppb | 50 ppb | 250 ppb | 500 ppb |
| Fruit Juice Flavor | Analyst A | -4 | -3 | -1 | 0 | 2 |
| | Analyst B | -4 | -3 | -1 | 0 | 2 |
| | Analyst C | -4 | -2 | -1 | 0 | 3 |
| | Average | -4.0 | -2.7 | -1.0 | 0.0 | 2.3 |

**[Table 7B]**

| (Storage at 5°C) | | Test *Ponzu* 9-1 | Test *Ponzu* 10-1 | Test *Ponzu* 11-1 | Test *Ponzu* 12-1 | Test *Ponzu* 13-1 |
|---|---|---|---|---|---|---|
| Phenethyl Acetate Concentration (Based on Test *Ponzu)* | | 0 ppb | 1 ppb | 10 ppb | 50 ppb | 100 ppb |
| Phenethyl Acetate Concentration (Based on Fruit Juice) | | 0 ppb | 5 ppb | 50 ppb | 250 ppb | 500 ppb |
| Off-Taste | Analyst A | | 0 | -1 | -1 | -2 |
| | Analyst B | | 0 | -1 | -2 | -2 |
| | Analyst C | | 0 | -1 | -2 | -3 |
| | Average | | 0.0 | -1.0 | -1.7 | -2.3 |

| (Storage at 40°C) | | Test *Ponzu* 9-2 | Test *Ponzu* 10-2 | Test *Ponzu* 11-2 | Test *Ponzu* 12-2 | Test *Ponzu* 13-2 |
|---|---|---|---|---|---|---|
| Phenethyl Acetate Concentration (Based on Test *Ponzu)* | | 0 ppb | 1 ppb | 10 ppb | 50 ppb | 100 ppb |
| Phenethyl Acetate Concentration (Based on Fruit Juice) | | 0 ppb | 5 ppb | 50 ppb | 250 ppb | 500 ppb |
| Off-Taste | Analyst A | 3 | 3 | 2 | 1 | 0 |
| | Analyst B | 3 | 3 | 1 | 1 | 0 |
| | Analyst C | 3 | 3 | 1 | 0 | 0 |
| | Average | 3.0 | 3.0 | 1.3 | 0.7 | 0.0 |

**[Table 7C]**

| (Storage at 5°C) | | Test *Ponzu* 9-1 | Test *Ponzu* 10-1 | Test *Ponzu* 11-1 | Test *Ponzu* 12-1 | Test *Ponzu* 13-1 |
|---|---|---|---|---|---|---|
| Phenethyl Acetate Concentration (Based on Test *Ponzu)* | | 0 ppb | 1 ppb | 10 ppb | 50 ppb | 100 ppb |
| Phenethyl Acetate Concentration (Based on Fruit Juice) | | 0 ppb | 5 ppb | 50 ppb | 250 ppb | 500 ppb |
| Fresh Citrus Aroma | Analyst A | - | 0 | 0 | 1 | 2 |
| | Analyst B | | 0 | 0 | 1 | 2 |
| | Analyst C | | 0 | 1 | 1 1.0 | 2 |
| | Average | | 0.0 | 0.3 | | 2.0 |

| (Storage at 40°C) | | Test *Ponzu* 9-2 | Test *Ponzu* 10-2 | Test *Ponzu* 11-2 | Test *Ponzu* 12-2 | Test *Ponzu* 13-2 |
|---|---|---|---|---|---|---|
| Phenethyl Acetate Concentration (Based on Test *Ponzu)* | | 0 ppb | 1 ppb | 10 ppb | 50 ppb | 100 ppb |
| Phenethyl Acetate Concentration (Based on Fruit Juice) | | 0 ppb | 5 ppb | 50 ppb | 250 ppb | 500 ppb |
| Fresh Citrus Aroma | Analyst A | -4 | -4 | -2 | -1 | -1 |
| | Analyst B | -4 | -4 | -2 | -1 | -1 |
| | Analyst C | -4 | -4 | -1 | -1 | -1 |
| | Average | -4.0 | -4.0 | -1.7 | -1.0 | -1.0 |

As shown in Table 7A to Table 7C, the favorable aromas ("fruit juice flavor" and "fresh citrus aroma") of the test *ponzu* 9-2 stored at 40°C without the addition of phenethyl acetate were weak, and the unfavorable flavor ("off-taste") was felt strongly. However, as the results of the test *ponzus* 10-2 to 13-2 show, there was a tendency towards stronger favorable aromas and towards reduction in the unfavorable flavor depending on the amount of added phenethyl acetate. A similar tendency was obtained also from the test results using the *test ponzus* stored at 5°C.

From the above results, it was found that *a ponzu* with the addition of phenethyl acetate can be stored as *a ponzu* having a favorable fruit juice aroma regardless of the temperature conditions.

### INDUSTRIAL APPLICABILITY

The pasteurized soy sauce of an aspect of the invention can further improve the flavors of a food material and a cooked material and can be manufactured by a brewing process and thus can be industrially manufactured and utilized with a commercial soy sauce or in place of a commercial soy sauce.

## Claims

1. A method for manufacturing a phenethyl acetate-containing soy sauce, including
a step of obtaining a soy sauce *moromi* soup by subjecting a soy sauce *moromi* obtainable by subjecting a soy sauce *koji* to lactic acid fermentation using a soy sauce lactic acid bacterium to a solid-liquid separation treatment,
a step of obtaining a pasteurized soy sauce *moromi* soup by subjecting the soy sauce *moromi* soup to a pasteurization treatment or an enzyme inactivation treatment, and
a step of obtaining a phenethyl acetate-containing soy sauce by subjecting the pasteurized soy sauce *moromi* soup to yeast fermentation using a soy sauce yeast, which is a salt-tolerant yeast such as *Zygosaccharomyces rouxii, Zygosaccharomyces bailii (Z. bailii), Candida etchellsii* and *Candida versatilis (C. versatilis)*

## Patentansprüche

1. Verfahren zum Herstellen einer phenethylacetathaltigen Sojasauce, umfassend einen Schritt zum Erhalten einer Sojasauce-Moromi-Suppe durch Unterziehen eines Sojasauce*-Moromi,* das durch Unterziehen eines Sojasauce-Koji einer Milchsäurefermentation unter Verwendung eines Sojasaucenmilchsäurebakteriums erhaltbar ist, einer Fest-Flüssig-Trennungsbehandlung,
einen Schritt zum Erhalten einer pateurisierten Sojasauce-Moromi-Suppe durch Unterziehen der Sojasauce-Moromi-Suppe einer Pasteurisierungsbehandlung oder einer Enzymdeaktivierungsbehandlung, und
einen Schritt zum Erhalten einer phenethylacetathaltigen Sojasauce durch Unterziehen der pasteurisierten Sojasauce-Moromi-Suppe einer Hefefermentation unter Verwendung einer Sojasaucenhefe, die eine salztolerante Hefe, wie beispielsweise *Zygosaccharomyces rouxii, Zygosaccharomyces bailii (Z. bailii), Candida etchellsii* und *Candida versatilis (C. versatilis),* ist.

## Revendications

1. Procédé de fabrication d'une sauce soja contenant de l'acétate de phénéthyle, comprenant une étape consistant à obtenir une soupe *moromi* de sauce soja en soumettant un *moromi* de sauce soja pouvant être obtenu en soumettant un *koji* de sauce soja à une fermentation lactique à l'aide d'une bactérie lactique de sauce soja à un traitement de séparation solide-liquide,
une étape consistant à obtenir une soupe *moromi* de sauce soja pasteurisée en soumettant la soupe *moromi* de sauce soja à un traitement de pasteurisation ou à un traitement d'inactivation enzymatique, et
une étape consistant à obtenir une sauce soja contenant de l'acétate de phénéthyle en soumettant la soupe *moromi* de sauce soja pasteurisée à une fermentation à la levure à l'aide d'une levure de sauce soja, qui est une levure tolérant le sel telle que *Zygosaccharomyces rouxii, Zygosaccharomyces bailii (Z. bailii), Candida etchellsii et Candida versatilis (C versatilis).*
